# FASCICULE DE BREVET EUROPEEN

(11) **EP 2 773 557 B1**
(45) Date de publication et mention de la délivrance du brevet: **15.07.2020**
(21) Numéro de dépôt: 12790614.7
(22) Date de dépôt: 24.10.2012
(51) Int. Cl.: B64C 7/02, B64C 21/10, B64C 23/00, B64D 29/02, B64D 27/18

(54) **PYLONE D'ACCROCHAGE POUR TURBOMACHINE**
TURBOMOTORBEFESTIGUNGSPYLON
TURBO ENGINE ATTACHMENT PYLON

(30) Priorité: 03.11.2011 FR 1159953
(43) Date de publication de la demande: 10.09.2014
(73) Titulaire: Safran Aircraft Engines, 75015 Paris (FR)
(72) Inventeur: BODARD, Guillaume, F-77550 Moissy-Cramayel Cedex (FR); HENRY, Cyprien, F-77550 Moissy-Cramayel Cedex (FR); JODET, Norman, F-77550 Moissy-Cramayel Cedex (FR); VUILLEMIN, Alexandre, Alfred, Gaston, F-77550 Moissy-Cramayel Cedex (FR)
(74) Mandataire: Cabinet Beau de Loménie
(86) Numéro de dépôt international: PCT/FR2012/052439
(87) Numéro de publication internationale: WO 2013/064768

(56) Documents cités:
- EP-A2- 2 402 251
- WO-A1-2011/055062
- GB-A- 2 112 077
- GB-A- 2 260 369
- US-A1- 2007 107 414

## Description

### DOMAINE DE L'INVENTION

Le présent exposé concerne un pylône (ou mât) d'accrochage pour turbomachine et un dispositif pour aéronef comprenant un tel pylône.

Plus particulièrement, un tel pylône peut servir à accrocher un turboréacteur à l'aile d'un avion.

### ETAT DE LA TECHNIQUE ANTERIEURE

La tendance globale des quarante dernières années pour réduire le bruit des moteurs d'avions et, plus précisément, des turboréacteurs double-flux, a été d'augmenter le taux de dilution ou BPR (pour "By Pass Ratio") de ces turboréacteurs, c'est-à-dire d'augmenter le ratio entre le flux secondaire et le flux primaire sortant du turboréacteur. Les projets actuels proposent des moteurs à BPR élevé, compris entre 9 et 12, alors que dans les années 1970 les BPR étaient compris entre 5 et 6. En effet, à iso-poussée, l'augmentation du débit du flux secondaire permet de réduire les vitesses d'éjection et de réduire ainsi le bruit dû au mélange des gaz d'éjection. L'augmentation du BPR pose cependant un inconvénient majeur en termes d'intégration des moteurs sur l'avion car l'augmentation du débit du flux secondaire implique de facto une augmentation du diamètre des moteurs. Or, aujourd'hui, la taille limite raisonnable pour intégrer un turboréacteur à soufflante carénée sous une aile d'avion semble quasiment atteinte et il paraît difficile de continuer dans cette voie.

Une autre solution connue pour diminuer le bruit de jet d'un turboréacteur, en particulier au décollage, consiste à réaliser des chevrons sur le bord de la tuyère primaire du turboréacteur, comme décrit, par exemple, dans le document de brevet EP 1580419 A1. Cette solution, si elle est assez efficace en termes d'acoustique, présente cependant un effet négatif sur les performances du turboréacteur en régime de croisière. Les gains démontrés restent, de plus, assez modestes. Le document WO 2011/055062 A1, qui décrit toutes les caractéristiques du préambule de la revendication 1, est considéré comme le document de l'art antérieur le plus proche. Le document EP 2 402 251 A2 est un document de l'art antérieur au sens de l'article 54(3) CBE.

Il existe donc un besoin pour une solution permettant de réduire le bruit des moteurs d'avions, qui soit dépourvue, au moins en partie, des inconvénients précités.

### PRESENTATION DE L'INVENTION

Le présent exposé concerne un pylône d'accrochage pour turbomachine tel que défini dans la revendication 1, le pylône d'accrochage étant configuré pour relier une turbomachine à un élément de structure d'un aéronef, le pylône ayant un profil aérodynamique qui est défini par deux faces latérales opposées et qui est délimité longitudinalement entre un bord d'attaque et un bord de fuite.

Ce pylône est tel qu'il comprend, en outre, sur chacune de ses faces latérales, une série de déflecteurs transversalement espacés les uns des autres. Ces déflecteurs définissent entre eux et avec la paroi extérieure de la turbomachine des canaux à l'intérieur desquels circule un flux d'air au décollage de l'aéronef ou en vol. Ces canaux sont convergents et courbes de manière à accélérer ledit flux d'air et à guider ce flux d'air vers le jet de la turbomachine.

Par canaux "convergents", on entend désigner des canaux dont la section de passage diminue progressivement de l'amont vers l'aval, de manière à accélérer le flux d'air passant dans ces canaux.

La présence des déflecteurs permet d'accélérer et de dévier une partie de l'écoulement d'air contournant le pylône dans le but de réduire le bruit de jet de la turbomachine. Par ailleurs, comparativement à la solution connue utilisant des chevrons, les déflecteurs ont l'avantage de ne pas faire obstacle au jet sortant de la turbomachine.

Dans le présent exposé, les adjectifs "longitudinal" et "transversal" (adverbes "longitudinalement" et "transversalement") sont utilisés en référence aux directions longitudinale et transversale du pylône. La direction longitudinale du pylône est une direction parallèle à l'axe moteur de la turbomachine (i.e. l'axe de rotation du rotor de la turbomachine), lorsque cette dernière est fixée au pylône. Cette direction longitudinale correspond par conséquent à la direction générale de l'écoulement d'air circulant autour du pylône dans des conditions normales d'utilisation. La direction transversale est la direction perpendiculaire à la direction longitudinale, qui passe par la turbomachine.

Le pylône est délimité transversalement entre une extrémité distale destinée à être fixée à la turbomachine et une extrémité proximale destinée à être fixée à l'élément de structure de l'aéronef. Les adjectifs "proximal" et "distal" sont utilisés en référence au raccordement du pylône à l'élément de structure de l'aéronef.

Enfin, l'amont et l'aval sont définis par rapport au sens d'écoulement normal de l'air au décollage ou en vol.

Le présent exposé concerne également un dispositif pour aéronef, comprenant une turbomachine et un pylône du type précité, au moyen duquel la turbomachine peut être reliée à un élément de structure de l'aéronef.

Ladite turbomachine peut être une turbomachine aéronautique comme un moteur d'avion, plus particulièrement un turboréacteur ou un turbopropulseur. Par ailleurs, ledit élément de structure peut être un élément de voilure ou de fuselage de l'aéronef. L'aéronef peut être un avion. Bien entendu, l'invention ne se limite pas à ces exemples.

Dans certains modes de réalisation, la turbomachine est un moteur d'avion, en particulier un turboréacteur, et l'élément de structure est une aile d'avion.

Lorsque l'avion se déplace (e.g. au décollage ou en vol), un écoulement d'air (appelé "air extérieur") circule entre le moteur et l'aile. Le pylône qui lie ces deux éléments fait obstacle à cet écoulement et génère une poche d'énergie cinétique turbulente importante qui aspire le jet vers l'aile. Il en résulte deux phénomènes générateurs de bruit, dus aux interactions suivantes :
- l'interaction entre le sillage du pylône et le jet du moteur; et
- l'interaction entre l'aile et le jet aspiré vers l'aile.

Grâce à la solution proposée, il est possible de contrôler une partie de l'écoulement d'air extérieur afin de la rendre utile pour la réduction du bruit de jet. En particulier, le fait d'accélérer l'air extérieur en le guidant vers le jet au moyen des redresseurs, permet de diminuer le gradient de vitesse dans la couche de mélange entre le jet et l'air extérieur. En outre, il a été constaté que le fait de dévier une partie de l'air extérieur vers la partie basse du pylône permettait d'atténuer la génération de la poche d'énergie cinétique turbulente en aval du pylône.

Ainsi, grâce à la solution proposée, il est possible de diminuer des phénomènes générateurs de bruit dont l'interaction entre le sillage du pylône et le jet, et l'interaction entre le jet et la voilure.

L'interaction entre le sillage du pylône et le jet peut être diminuée car la poche d'énergie cinétique turbulente qui en est responsable peut être diminuée.

L'interaction entre le jet et la voilure peut être diminuée car la poche d'énergie cinétique turbulente peut être diminuée par l'augmentation de la vitesse de l'écoulement autour de la turbomachine. De plus, en contrôlant l'écoulement d'air extérieur, il est possible d'influencer le jet pour réduire son expansion radiale à l'approche de la voilure.

En outre, le bruit de mélange peut être réduit. En effet, celui-ci provient du cisaillement entre le flux d'air, typiquement le flux secondaire, issu du moteur et le flux d'air extérieur, ces deux flux évoluant à des vitesses différentes. Une accélération de l'air extérieur et, donc, un écart de vitesse plus faible entre ces deux écoulements contribue à la réduction du cisaillement et de la composante de bruit qui en résulte. Le bruit de choc peut également être réduit. En effet, le bruit de choc provient de l'interaction complexe entre les cellules de choc présentes dans le flux secondaire et la turbulence de la couche de mélange. Moins de cisaillement implique moins de turbulence et donc une interaction moins importante entre les deux éléments qui génèrent le bruit de choc.

Dans certains modes de réalisation, les séries de déflecteurs sont situées uniquement dans la partie distale du pylône, c'est-à-dire la partie proche de la turbomachine. Ceci permet d'éviter la présence des déflecteurs dans la partie proximale du pylône, proche de l'aile, et ainsi de minimiser l'impact des déflecteurs sur la portance de l'aile.

Dans certains modes de réalisation, chaque déflecteur s'étend longitudinalement à partir du bord d'attaque du pylône. Ceci permet d'éviter le développement d'une couche limite extérieure en amont des canaux crées par les déflecteurs, car une telle couche limite nuirait à la bonne canalisation de l'écoulement.

Dans certains modes de réalisation, chaque déflecteur s'étend longitudinalement en direction du jet, l'extrémité aval de chaque déflecteur étant proche du jet, tout en étant à l'extérieur de celui-ci. Ceci permet d'amener le flux d'air le plus proche possible du jet sans que les redresseurs ne fassent obstacle au jet.

Dans certains modes de réalisation, chaque déflecteur présente, dans le sens de l'épaisseur du pylône, une hauteur comprise entre 5 et 50% du diamètre de la turbomachine. Ceci permet de contrôler l'écoulement à proximité de la turbomachine et de ne pas impacter l'écoulement au-delà de cette zone d'intérêt.

Dans certains modes de réalisation, chaque déflecteur est vrillé de manière à guider le flux d'air à la fois vers le jet de la turbomachine et dans le sillage du pylône. En d'autres termes, les déflecteurs présentent une courbure à la fois dans un plan de coupe longitudinal parallèle à la direction moteur-aile, et dans un plan de coupe transversal.

Dans certains modes de réalisation, chaque série de déflecteurs comprend 1 à 4 déflecteurs. Lorsque la "série" ne comprend qu'un déflecteur (mode de réalisation non revendiqué), ledit canal convergent et courbe est défini entre ce déflecteur et la paroi extérieure de la turbomachine.

Dans certains modes de réalisation, chaque série de déflecteurs comprend au moins deux déflecteurs et, de préférence, au moins trois déflecteurs. Ceci permet de réduire les gradients de vitesse par paliers, et donc d'avoir plusieurs couches de cisaillement entre des flux de vitesses assez proches.

Les caractéristiques et avantages précités, ainsi que d'autres, apparaîtront à la lecture de la description détaillée qui suit, d'exemples de réalisation du pylône d'accrochage et du dispositif proposés. Cette description détaillée fait référence aux dessins annexés.

### BREVE DESCRIPTION DES DESSINS

Les dessins annexés sont schématiques et ne sont pas à l'échelle, ils visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques espacées de 100, 200, etc.
La FIG 1 représente, en perspective, un exemple de pylône d'accrochage reliant un turboréacteur à une aile d'avion.
La FIG 2 représente, en vue de côté, le pylône de la FIG 1.
La FIG 3 est une vue avant selon la flèche III du pylône de la FIG 2.
La FIG 4 est une vue arrière selon la flèche IV du pylône de la FIG 2.
La FIG 5 est une vue avant, analogue à celle de la FIG 3, d'un autre exemple de pylône.
La FIG 6 est une vue arrière, analogue à celle de la FIG 4, du pylône de la FIG 5.

### DESCRIPTION DETAILLEE D'EXEMPLES DE REALISATION

Des exemples de réalisation sont décrits en détail ci-après, en référence aux dessins annexés. Ces exemples illustrent les caractéristiques et les avantages de l'invention. Il est toutefois rappelé que l'invention ne se limite pas à ces exemples. En particulier, bien que l'invention soit décrite ci-après dans le cadre de son application à un turboréacteur (du type à double flux séparés), fixé sous une aile d'avion, l'invention ne se limite pas à cette application.

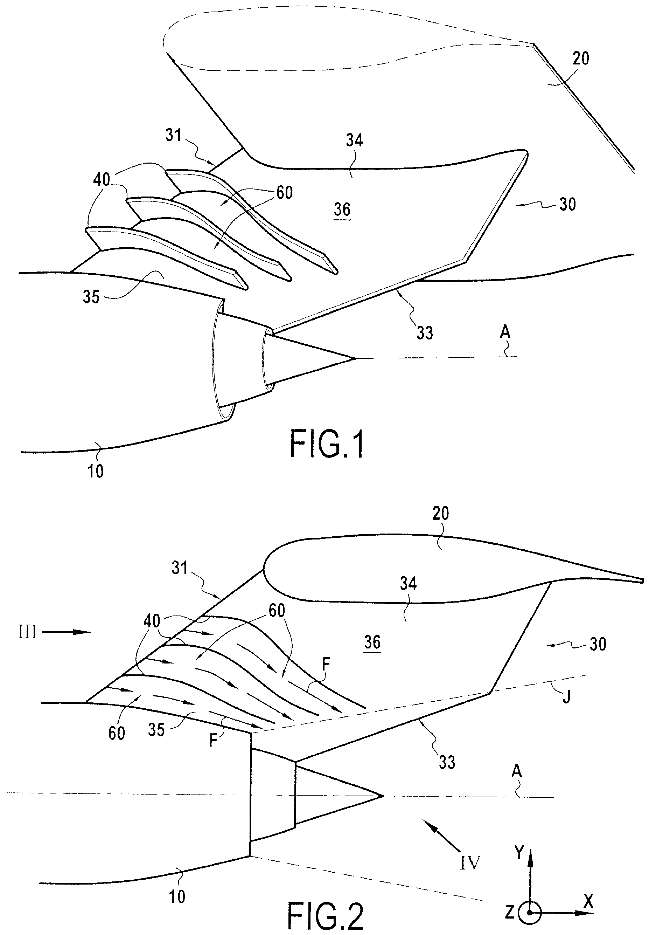

Les FIGS 1 à 4 représentent un turboréacteur 10 fixé sous une aile d'avion 20 au moyen d'un pylône d'accrochage 30. L'axe moteur A du turboréacteur 10 est représenté en traits mixtes sur les figures.

Le pylône 30 a un profil aérodynamique défini par deux faces opposées 36, 38 et délimité longitudinalement (i.e. parallèlement à l'axe moteur A) entre un bord d'attaque 31 et un bord de fuite 33. Le pylône 30 est délimité transversalement entre une extrémité distale 35 fixée au turboréacteur 10 et une extrémité proximale 34 fixée à l'aile 20 de l'avion.

Les directions longitudinale et transversale sont respectivement repérées X et Y sur les figures. La direction Z, repérée sur la FIG 2, est la direction de l'épaisseur du pylône 30. On appelle "plan longitudinal" un plan parallèle aux directions X et Y. Un plan longitudinal est noté XY. On appelle "plan transversal" un plan parallèle aux directions Y et Z. Un plan transversal est noté YZ.

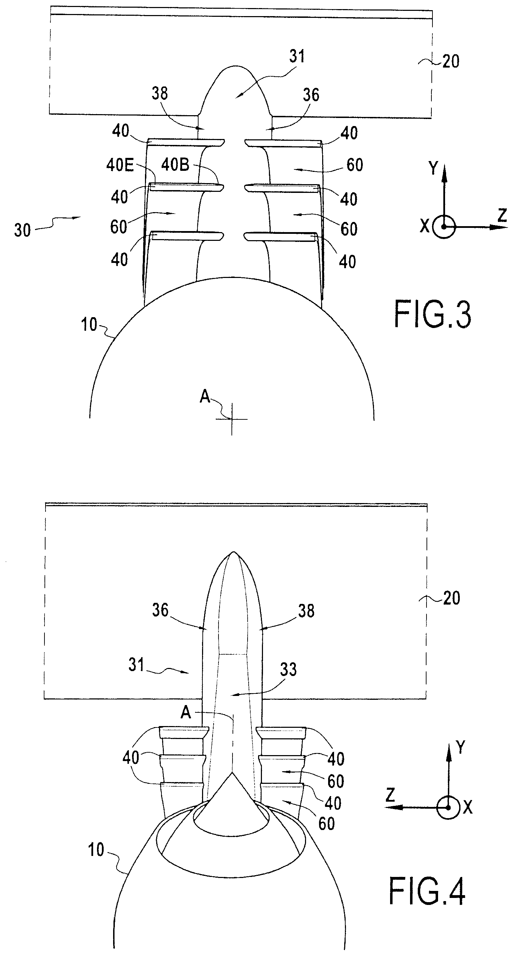

Le pylône 30 comprend, en outre, sur chacune de ses faces latérales 36, 38, une série de trois déflecteurs 40 formés par des ailettes et reliés par leur base 40B au corps du pylône 30 (voir FIG 3). Dans un plan transversal YZ, les déflecteurs 40 s'étendent sensiblement perpendiculairement par rapport aux faces 36, 38, depuis leur base 40B jusqu'à leur extrémité libre 40E. Les déflecteurs 40 sont, par exemple, fixés par rivetage ou par soudage au corps du pylône. Les déflecteurs 40 du pylône 30 sont transversalement (i.e. suivant la direction Y) espacés les uns des autres et définissent entre eux des canaux 60. Un flux d'air F circule dans ces canaux 60 au décollage ou en vol. Ces canaux 60 sont convergents en ce sens que leur section de passage diminue progressivement de l'amont vers l'aval. En particulier, dans l'exemple, la hauteur (mesurée suivant l'axe Z) des redresseurs 40 est sensiblement constante le long des canaux 60, alors que les redresseurs 40 se rapprochent progressivement les uns des autres, de l'amont vers l'aval (voir FIG 2). Il en résulte une diminution de la section de passage des canaux 60 qui provoque une accélération du flux d'air F circulant dans ces canaux 60.

Les redresseurs 40 sont courbes dans un plan longitudinal XY, comme représenté sur la FIG 2, ce qui permet de dévier le flux d'air F vers le jet J sortant du turboréacteur. Le jet J est schématisé en pointillés sur la FIG 2. On notera que les déflecteurs 40 ne font pas obstacle au jet J. En particulier, l'extrémité aval de chaque déflecteur 40 est située à proximité du jet J tout en restant à l'extérieur de celui-ci (voir FIG 2). Ainsi, aucun déflecteur 40 ne s'étend longitudinalement jusqu'au bord aval 33 du pylône. Une telle configuration permet d'amener le flux d'air F le plus proche possible du jet J sans toutefois faire obstacle à celui-ci.

Les séries de déflecteurs 40 sont situées dans la partie distale du pylône 30, proche du turboréacteur 10. La partie proximale du pylône 30, proche de l'aile 20, est quant à elle dépourvue de déflecteurs 40, ce qui permet de minimiser l'impact des déflecteurs 40 sur la portance de l'aile 20.

Chaque déflecteur 40 s'étend longitudinalement à partir du bord d'attaque 31 du pylône (voir FIGS 2 et 3). Ceci permet d'éviter le développement d'une couche limite extérieure en amont des canaux 60, car une telle couche limite nuirait à la bonne canalisation du flux F dans les canaux 60.

Dans le sens de l'épaisseur du pylône 30, i.e. dans la direction Z, chaque déflecteur 40 présente une hauteur comprise entre 5 et 50% du diamètre du turboréacteur 10. Dans l'exemple, cette hauteur est égale à environ 20% du diamètre. Ceci permet de contrôler l'écoulement à proximité de la turbomachine et de ne pas impacter l'écoulement au-delà de cette zone d'intérêt.

Dans certains modes de réalisation, chaque déflecteur 40 est vrillé de manière à guider le flux d'air F à la fois vers le jet du turboréacteur 10 et dans le sillage du pylône 30. En d'autres termes, les déflecteurs présentent une courbure à la fois dans un plan de coupe longitudinal XY, et dans un plan de coupe transversal YZ.

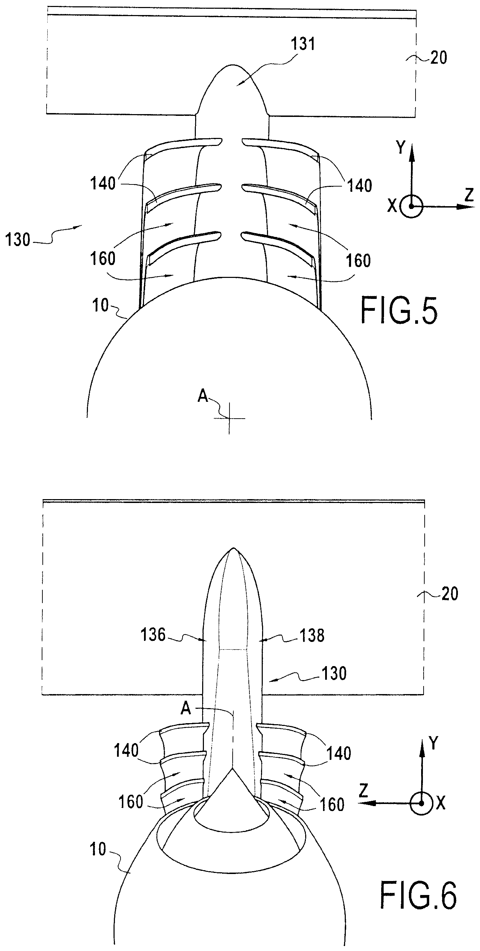

Un autre exemple de pylône 130 est représenté sur les FIGS 5 et 6, ce pylône 130 diffère de celui des FIGS 1-4 uniquement par le fait que les déflecteurs 140 sont courbes dans le plan transversal YZ, au lieu d'être droits comme les déflecteurs 40.

Les déflecteurs 140 des FIGS 5 et 6 sont vrillés en ce sens qu'ils présentent une courbure dans le plan longitudinal XY et une courbure dans le plan transversal YZ. On notera que, comme les déflecteurs 140 suivent les faces 136, 138, du pylône, ils suivent la courbure de ces faces dans le plan XZ.

La courbure dans le plan transversal YZ permet de guider le flux d'air F à la fois vers le jet J du turboréacteur 10 et dans le sillage du pylône 130. Cette courbure est telle que, dans le plan transversal YZ, les déflecteurs 140 définissent une concavité orientée vers le turboréacteur 10.

Dans l'exemple, la courbure des déflecteurs 140 est de plus en plus marquée à mesure que l'on s'approche du turboréacteur 10, comme représenté sur les FIGS 5 et 6. Ceci permet d'accélérer l'écoulement externe à la turbomachine juste avant l'éjection.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Pylône d'accrochage pour turbomachine, configuré pour relier une turbomachine à un élément de structure d'un aéronef, le pylône (30) ayant un profil aérodynamique défini par deux faces latérales opposées (36, 38) et délimité longitudinalement entre un bord d'attaque (31) et un bord de fuite (33), le pylône (30) comprenant, en outre, sur chacune de ses faces latérales (36, 38), une série de déflecteurs (40) transversalement espacés les uns des autres de manière à définir entre eux et avec la paroi extérieure de la turbomachine, lorsque ladite turbomachine est reliée à l'aéronef, des canaux (60) à l'intérieur desquels circule un flux d'air (F) au décollage de l'aéronef ou en vol, **caractérisé en ce que** ces canaux (60) sont convergents, la section de passage de ces canaux diminuant progressivement de l'amont vers l'aval, et courbes, de manière à accélérer ledit flux d'air (F) et à guider ce flux d'air (F) vers le jet (J) de la turbomachine.

2. Pylône selon la revendication 1, dans lequel le pylône (30) s'étend transversalement entre une extrémité distale (35) destinée à être fixée à la turbomachine et une extrémité proximale (34) destinée à être fixée à l'élément de structure de l'aéronef, et dans lequel la partie proximale du pylône (30) est dépourvue de déflecteurs (40).

3. Pylône selon la revendication 1 ou 2, dans lequel chaque déflecteur (40) s'étend longitudinalement à partir du bord d'attaque (31) du pylône (30).

4. Pylône selon l'une quelconque des revendications 1 à 3, dans lequel chaque déflecteur (40) s'étend longitudinalement en direction du jet (J), l'extrémité aval de chaque déflecteur (40) étant située à proximité du jet (J), tout en restant à l'extérieur de ce jet (J).

5. Pylône selon l'une quelconque des revendications 1 à 4, dans lequel chaque déflecteur (40) présente, dans le sens de l'épaisseur du pylône (30), une hauteur comprise entre 5 et 50% du diamètre de la turbomachine.

6. Pylône selon l'une quelconque des revendications 1 à 5, dans lequel chaque déflecteur (140) est vrillé de manière à guider le flux d'air (F) à la fois vers le jet (J) de la turbomachine et dans le sillage du pylône (130).

7. Pylône selon l'une quelconque des revendications 1 à 6, dans lequel chaque série de déflecteurs (40) comprend : 2 à 4 déflecteurs.

8. Dispositif pour aéronef, comprenant :
une turbomachine; et
un pylône (30) selon l'une quelconque des revendications précédentes, au moyen duquel la turbomachine peut être reliée à un élément de structure de l'aéronef.

9. Dispositif selon la revendication 8, dans lequel la turbomachine est un moteur d'avion, et dans lequel l'élément de structure est une aile d'avion (20).

10. Dispositif selon la revendication 8 ou 9, dans lequel la turbomachine est un turboréacteur (10).

## Patentansprüche

1. Pylon zur Aufhängung einer Turbomaschine, der dazu ausgestaltet ist, eine Turbomaschine mit einem Strukturelement eines Luftfahrzeugs zu verbinden, wobei der Pylon (30) ein aerodynamisches Profil aufweist, das zwischen zwei gegenüberliegenden seitlichen Flächen (36, 38) definiert und der Länge nach zwischen einer Vorderkante (31) und einer Hinterkante (33) begrenzt wird, und der Pylon (30) ferner auf jeder seiner seitlichen Flächen (36, 38) eine Reihe von Deflektoren (40) umfasst, die in Querrichtung voneinander auf solche Weise beabstandet sind, dass sie, wenn die Turbomaschine mit dem Luftfahrzeug verbunden ist, zwischen einander und mit der Außenwand der Turbomaschine Kanäle (60) definieren, innerhalb welcher beim Abheben des Luftfahrzeugs oder im Flug ein Luftstrom (F) zirkuliert, **dadurch gekennzeichnet, dass** diese Kanäle (60) sich verengen, wobei der Durchgangsquerschnitt dieser Kanäle von stromaufwärts nach stromabwärts progressiv abnimmt, und sie auf eine Weise gekrümmt sind, um den Luftstrom (F) zu beschleunigen und diesen Luftstrom (F) zu dem Strahl (J) der Turbomaschine hin zu leiten.

2. Pylon nach Anspruch 1, wobei der Pylon (30) sich in Querrichtung zwischen einem distalen Ende (35), das dazu bestimmt ist, an der Turbomaschine fixiert zu werden, und einem proximalen Ende (34), das dazu bestimmt ist, an dem Strukturelement des Luftfahrzeugs fixiert zu werden, erstreckt, und wobei der proximale Teil des Pylonen (30) frei von Deflektoren (40) ist.

3. Pylon nach Anspruch 1 oder 2, wobei jeder Deflektor (40) sich der Länge nach von der Vorderkante (31) des Pylonen (30) weg erstreckt.

4. Pylon nach einem der Ansprüche 1 bis 3, wobei jeder Deflektor (40) sich der Länge nach in Richtung des Strahls (J) erstreckt und das stromabwärtige Ende eines jeden Deflektors (40) sich in der Nähe des Strahls (J) befindet, dabei jedoch außerhalb dieses Strahls (J) bleibt.

5. Pylon nach einem der Ansprüche 1 bis 4, wobei jeder Deflektor (40) in der Dickenrichtung des Pylonen (30) eine Höhe zwischen 5 und 50 % des Durchmessers der Turbomaschine aufweist.

6. Pylon nach einem der Ansprüche 1 bis 5, wobei jeder Deflektor (140) auf eine Weise verdrillt ist, dass er den Luftstrom (F) gleichzeitig zu dem Strahl (J) der Turbomaschine hin und in den Windschatten des Pylonen (130) leitet.

7. Pylon nach einem der Ansprüche 1 bis 6, wobei jede Reihe von Deflektoren (40) 2 bis 4 Deflektoren umfasst.

8. Vorrichtung für ein Luftfahrzeug, umfassend:
eine Turbomaschine, und
einen Pylon (30) nach einem der vorhergehenden Ansprüche, mittels welchem die Turbomaschine mit einem Strukturelement des Luftfahrzeugs verbunden werden kann.

9. Vorrichtung nach Anspruch 8, wobei die Turbomaschine ein Flugzeugtriebwerk ist, und wobei das Strukturelement eine Flugzeugtragfläche (20) ist.

10. Vorrichtung nach Anspruch 8 oder 9, wobei die Turbomaschine ein Turbinenstrahltriebwerk (10) ist.

## Claims

1. A pylon for attaching a turbine engine, the pylon being configured to connect the engine to a structural element of an aircraft, the pylon (30) having a streamlined profile defined by two opposite lateral faces (36, 38) and defined longitudinally between a leading edge (31) and a trailing edge (33), the pylon (30) further comprising, on each of its lateral faces (36, 38) a respective series of deflectors (40) that are transversely spaced apart from one another so that between them and together with the outside wall of the engine, when said engine is connected to the aircraft, they define channels (60) within which air streams (F) flow on aircraft takeoff or in flight, **characterized in that** these channels (60) are convergent, the flow section of these channels (60) decreasing progressively going from upstream to downstream, and curved, in such a manner as to accelerate said air streams (F) and to guide the air streams (F) towards the jet (J) of the engine.

2. A pylon according to claim 1, wherein the pylon (30) extends transversely between a distal end (35) for fastening to the engine and a proximal end (34) for fastening to the structural element of the aircraft, and wherein the proximal portion of the pylon (30) does not have deflectors (40).

3. A pylon according to claim 1 or claim 2, wherein each deflector (40) extends longitudinally from the leading edge (31) of the pylon (30).

4. A pylon according to any one of claims 1 to 3, wherein each deflector (40) extends longitudinally towards the jet (J), the downstream end of each deflector (40) being situated in the proximity of the jet (J), while remaining outside the jet (J).

5. A pylon according to any one of claims 1 to 4, wherein each deflector (40) presents a height, in the thickness direction of the pylon (30), lying in the range 5% to 50% of the diameter of the engine.

6. A pylon according to any one of claims 1 to 5, wherein each deflector (140) is twisted so as to guide the air streams (F) both towards the jet (J) of the engine and into the wake of the pylon (130).

7. A pylon according to any one of claims 1 to 6, wherein each series of deflectors (40) comprises two to four deflectors.

8. A device for an aircraft, comprising:
a turbine engine; and
a pylon (30) according to any preceding claim, whereby the engine can be connected to a structural element of the aircraft.

9. A device according to claim 8, wherein the engine is an aeroengine and wherein the structural element is an airplane wing (20).

10. A device according to claim 8 or claim 9, wherein the engine is a turbojet (10).
